# EUROPÄISCHE PATENTSCHRIFT

(11) **EP 3 545 804 B1**
(45) Veröffentlichungstag und Bekanntmachung des Hinweises auf die Patenterteilung: **21.04.2021**
(21) Anmeldenummer: 19163654.7
(22) Anmeldetag: 19.03.2019
(51) Int. Cl.: A47K 13/00, B33Y 10/00, B33Y 80/00, B41J 3/407, B41M 5/00

(54) **VERFAHREN ZUR HERSTELLUNG EINES TOILETTENSITZES MIT WENIGSTENS EINEM TEILWEISE RELIEFARTIGEN MOTIV UND EIN NACH DIESEM VERFAHREN HERGESTELLTER TOILETTENSITZ**
METHOD FOR THE PREPARATION OF A TOILET SEAT WITH AT LEAST ONE PARTIALLY RELIEF-STYLE MOTIF AND A TOILET SEAT OBTAINED BY THIS METHOD
PROCÉDÉ DE FABRICATION D'UN SIÈGE DE TOILETTES DOTÉ D'AU MOINS UN MOTIF PARTIELLEMENT EN RELIEF ET SIÈGE DE TOILETTES FABRIQUÉ SELON LEDIT PROCÉDÉ

(30) Priorität: 26.03.2018 DE 102018107066
(43) Veröffentlichungstag der Anmeldung: 02.10.2019
(73) Patentinhaber: Zhejiang Hengyuan Sanitary Ware Co., Ltd., Linhai, Zheijiang 317000 (CN)
(72) Erfinder: XU, XiaoFeng, Linhai City, Zhejiang 317000 (CN)
(74) Vertreter: Buse, Mentzel, Ludewig Patentanwaltskanzlei

(56) Entgegenhaltungen:
- WO-A1-2016/191255
- DE-U1- 29 601 540
- JP-A- 2004 285 628
- US-A1- 2011 083 258
- US-A1- 2014 047 627

## Beschreibung

Die Erfindung betrifft ein Verfahren zur Herstellung eines Toilettensitzes mit wenigstens einem teilweise reliefartigen Motiv und ein nach diesem Verfahren hergestellter Toilettensitz.

Toilettensitze sind seit je weit verbreitet. In letzter Zeit kam immer mehr der Wunsch der Endverbraucher auf, die Toilettensitze dekorativer zu gestalten. Einige Verbraucher nutzten Aufkleber, mit denen sie ihre Toilettensitze verzierten. Aber diese halten oft nicht gut und lösen sich - insbesondere auch bei der häufigeren Einwirkung von Wasser und Reinigungsmitteln - ab. Zurück bleiben dann noch Klebereste, die den Toilettensitz unansehnlich machen.

Es gibt auch Toilettensitze, die farbig ausgestaltet oder die mit Motiven versehen sind. Hier ist eine breite Anzahl an verschiedenen Motiven erhältlich, angefangen von Mustern, bildlichen Darstellungen von Tieren oder Pflanzen, Comicfiguren, Landschaften etc. Diese Darstellungen sind aber jeweils nur zweidimensional und wirken oft sehr einfach.

Die DE 296 01 540 U1 beschreibt einen Toilettensitz bei auf zumindest eine Oberfläche des Deckels und/oder der Brille wenigstens auf einem Teilbereich ein graphisches oder Dekorationselement aufweist. Beschrieben werden verschiedene Möglichkeiten dieses Dekorationselement aufzubringen, unter anderem auch aufspritzen. Es ist hierbei jedoch nicht beschrieben, dem Dekorationselement mehr optische Tiefe und Realismus zu verleihen, indem dieses reliefartig ausgestaltet wird. Vielmehr wird als bevorzugte Ausführungsform dargestellt, dass das Dekorationselement auf einer Folie ausgebildet ist und dann an gewünschter Stelle aufgebracht werden kann. Es wird also lediglich ein zweidimensionales Dekorationselement für Toilettensitze beschrieben, welches die gleichen optischen Nachteile aufweist wie andere herkömmliche Dekorationselemente, insbesondere war die verbesserte und hochwertigere Optik und Haptik betrifft.

In der DE 10 2014 220 617 A1 wird ein Verfahren zur Weiterverarbeitung eines zumindest teilweise vorgefertigten Produktes beschrieben. Hierbei umfasst das Produkt eine Individualisierungsfläche, auf die mittels eines additiven Fertigungsverfahrens eine mehrdimensionale Individualisierung aufbringbar ist. Hierbei ist es nicht vorgesehen, die Individualisierung nach grafischen Aspekten so zu gestalten, dass sie eine besondere optische Tiefe und ein besonders realistisches dekoratives Bild abgibt, sondern sie dient vielmehr der individuellen Identifizierung eines Produktes.

Eine Verwendung eines Elements für Schreib-, Zeichen-, Markier- und/oder Malgerät oder Kosmetikgerät oder Eingabegerät für berührungsempfindliche Oberflächen wird in der DE 10 2015 012 940 A1 beschrieben. Hier ist das mindestens eine Element ein 3D-gedrucktes Element und besteht aus einem Grundkörper und mindestens einer Struktur, die visuell erkennbar und/oder haptisch ausgebildet ist. Die Struktur kann beispielsweise erhaben sein und aus der Oberfläche des Grundkörpers hervorstehen. Auch dieses Dokument beschreibt keine Methode ein Designelement mit mehr optischer Tiefe oder mehr Realismus zu versehen und somit optisch noch ansprechender zu gestalten als bekannte Designelemente. Vielmehr zielt das Versehen des Elements mit einer Struktur darauf ab, zu verhindern, dass eine Bedienperson bei der Arbeit mit dem Element zu schnell ermüdet.

JP 2004 285628 A beschreibt ein Verfahren zur Herstellung eines mit einem Motiv versehenen Toilettensitzes, wobei auf dem Toilettensitz auf wenigstens einer Seite das Motiv aufgebracht wird, im Weiteren Dekorseite genannt, wobei zunächst die Dekorseite gereinigt und ggf. noch geglättet und/oder geschliffen und/oder poliert wird, danach der geplante Verlauf des Motivs auf der Dekorseite vorskizziert wird, und dann ein einfarbiges Material durch Druck in Form des Motivs aufgebracht wird; und einen Toilettensitz mit wenigstens einem Motiv mit einem Sitzbereich und einem Deckel, der schwenkbar am Sitzbereich angeordnet ist, wobei das Motiv auf der Innenseite und/oder der Aussenseite des Deckels und/oder auf der Innenseite und/oder der Aussenseite des Sitzbereichs vorgesehen ist, und wobei das Motiv ein einfarbiges Material umfasst.

In den vorliegenden Unterlagen wird vereinfacht von einem Toilettensitz gesprochen. Damit sind sowohl der vollständige Toilettensitz als auch einzelne seiner Teile, wie Deckel und/oder Sitzbereich gemeint.

Aufgabe der Erfindung ist es daher, ein Verfahren zur Herstellung eines Toilettensitz mit verbessertem Motiv zu schaffen, das eine haptisch und optisch ansprechendere, hochwertigere, plastischere und realistischere Darstellung mit erhöhter optischer Tiefe aufweist sowie einen Toilettensitz, der diese Anforderungen an ein verbessertes Motiv erfüllt. Diese Aufgabe wird durch die Ansprüche 1 und 12 gelöst, denen folgende besondere Bedeutung zukommt.

Um einen Toilettensitz mit einem verbesserten Motiv, welches eine optisch und haptisch ansprechendere, hochwertigere, plastischere und realistischere Darstellung aufweist als herkömmliche Motive auf Toilettensitzen herzustellen, wird die Dekorseite des Toilettensitzes, auf der das zumindest bereichsweise reliefartige Motiv angeordnet werden soll, zunächst gereinigt, um es vollständig von Staub und Partikeln zu befreien. Je nach den Eigenschaften der Oberfläche der Dekorseite muss diese zuvor noch poliert und/oder geglättet und/oder geschliffen werden, um nach der Reinigung eine einwandfreie glatte und saubere Oberfläche zu erhalten. Dann wird der gewünschte Verlauf des Motivs auf der Dekorseite vorskizziert. Außerdem wird das benötigte Farbsystem, also die Zusammenstellung der benötigten Farben, um das gewünschte Ergebnis zu erzielen, ermittelt. Der gewünschte Verlauf des Reliefbereichs kann dabei als Strich oder auch als Musterverlauf ausgebildet sein.

Schließlich wird mittels 3D-Druck ein erstes einfarbiges Material auf die Dekorseite aufgebracht, um die reliefartige Struktur zu erzeugen. Es ist dabei vorteilhaft, wenn die einzelnen Tropfen des Materials nicht zu klein ausgeführt sind, um die reliefartige Struktur zu erzeugen. Hierbei erfolgt der Auftrag dieses ersten Materials wenigstens zweimal, ggf. jedoch auch häufiger. Es hat sich eine Sprühhäufigkeit von zwei bis fünf Mal - je nach genauem Verlauf der reliefartigen Struktur - bewährt. Hierdurch kann die reliefartige Struktur besonders realistisch hergestellt werden und dabei auch, je nach gewünschtem Design, verschiedene Dicken aufweisen. Durch das Aufbringen des ersten einfarbigen Materials wird ein Reliefrohling erzeugt. Dieser bildet quasi die Kontur des dreidimensionalen Reliefs aus und zugleich auch die höchsten Bereiche der Dekorseite. Häufig hat der fertige Reliefrohling einen Querschnitt, der rechteckig ausgebildet ist oder ein gleichschenkliges Trapez bildet. Das dafür verwendete Material ist einfarbig und somit oft preisgünstiger. Es hat sich bewährt ein schwarzes Material für den Aufbau der reliefartigen Struktur zu verwenden, da dann die danach aufgebrachten Farben der Farbmusterschicht noch besser zur Geltung kommen. Ein Verlaufen verschiedener Farben beim Aufbau der reliefartigen Struktur wird vermieden.

Dann wird ein zweites Material mittels 3D-Druck auf die Dekorseite des Toilettensitzes aufgebracht. Dieses zweite Material ist farbig und auf das spezielle Design abgestimmt. Es können also im Motiv verschiedene Farben verwendet werden, um das gewünschte Ergebnis zu erzielen. Selbstverständlich kann es auch Motive geben, bei denen nur eine einzige Farbe verwendet wird. Dabei können sowohl der Reliefrohling als auch ein oder mehrere weitere Bereiche der Dekorseite mit dem zweiten Material durch 3D-Druck bedruckt werden, so dass Bereiche des Motivs entstehen können, die eine reliefartige Struktur aufweisen und andere, die glatt bzw. eben ausgestaltet sind. Es kann auch die gesamte Dekorseite mit der reliefartigen Struktur versehen sein. Durch den Druck mit dem zweiten, farbigen Material entsteht auf der Dekorseite eine Farbmusterschicht.

Das Aufbringen der Farbmusterschicht kann in einem Schritt erfolgen oder auch in mehreren, je nach genauem Motiv. Ggf. kann für jede verwendete Farbe ein eigener Druckvorgang durchgeführt werden. Ein Verlaufen verschiedener Farben wird durch die unter der Farbmusterschicht angeordnete reliefartige Struktur vermieden, wodurch ein stabiler Farbverlauf entsteht und die unter der Farbmusterschicht angeordnete reliefartige Struktur dafür sorgt, dass die dreidimensionale Wirkung des Motivs verstärkt wird. Die Dicke der Farbmusterschicht ist dabei üblicherweise geringer, als die Dicke der reliefartigen Struktur.

Der Auswahl des Motivs sind dabei keine Grenzen gesetzt und es können Tiere, Pflanzen, Landschaften, Comicfiguren, Muster, Gemälde usw. umgesetzt werden. Es können je nach Motiv auch mehrere reliefartige Strukturen vorgesehen sein, die dann gemeinschaftlich und mit den weiteren Bereichen der Dekorseite mit dem zweiten farbigen Material bedruckt werden. Die verwendeten Druckverfahren kombinieren dabei einen klassischen 3D-Druck mit einem Tintenstrahldruckverfahren. Durch das erfindungsgemäße Druckverfahren wirkt das entstandene Motiv plastischer, realistischer und lebendiger, die Farben wirken frischer und das Motiv hat eine ansprechende und hochwertige Optik und Haptik und besitzt mehr optische Tiefe. Das Motiv erhält durch das erfindungsgemäße Herstellungsverfahren eine dreidimensionale Relieftextur. Das Verfahren kann in Serie durchgeführt werden, um eine große Anzahl an Toilettensitzen herzustellen.

Beim Auftrag der verschiedenen Materialien muss sichergestellt werden, dass die Dekorseite des Toilettensitzes nicht verschoben wird, damit die aufgetragene Farbmusterschicht mit dem Verlauf der reliefartigen Struktur übereinstimmt, um ein gutes Ergebnis zu erzielen.

In einem bevorzugten Ausführungsbeispiel wird zunächst ein Haftvermittler oder ein Stabilisierungsmittel auf die Dekorseite aufgebracht, bevor mit dem Auftrag des ersten und/oder des zweiten Materials begonnen wird. Hierdurch wird die Haftung der reliefartigen Struktur und der Farbstrukturschicht an der Dekorseite des Toilettensitzes verbessert. Haftvermittler oder ein Stabilisierungsmittel werden beispielsweise verwendet, wenn der Korpus des Toilettensitzes aus einem thermoplastischen Kunststoff, wie PVC oder Acrylglas, aus Glas, Gestein, Harnstoff-Formaldehyd usw. besteht. Diese Stabilisierungsschicht bzw. der Haftvermittler können beispielsweise aus einer Folie oder Platte bestehen, die auf die Dekorseite des Toilettensitzes aufgebracht wird. Als Mittel kann beispielsweise ein Kaliumpermanganathaltiges Mittel verwendet werden, da dies stark oxidierend wirkt. Außerdem können auch transparente Polymere verwendet werden, beispielsweise eine transparente Polyethylenterephthalat-Platte. Besteht der Korpus aus einem anderen Material, mit rauer Oberfläche wie ein Holzwerkstoff oder Bambus, kann oft auf eine Stabilisierungsschicht und/oder einen Haftvermittler verzichtet werden, da die Haftung des Materials an der Dekorseite auch so ausreichend ist.

Das erste und/oder das zweite Material werden vorzugsweise über wenigstens eine Düse auf die Dekorseite des Toilettensitzes aufgebracht. Hierbei wird das Material bevorzugterweise aufgespritzt. Die Düse kann dabei teil eines Auftragskopfes sein, an dem auch - bei der Verwendung von unter UV-Licht aushärtenden Materialien - direkt eine UV-Lichtquelle angeordnet sein kann, um nach dem Auftrag des Materials dieses auch gleich aushärten zu lassen. Durch ein mehrfaches Aufsprühen des ersten Materials entsteht so der gewünschte Reliefrohling. Die Verwendung von Materialien die unter UV-Licht aushärten ist deshalb vorteilhaft, weil dann die Aushärtung der Materialien gut gesteuert werden kann, ebenso wie der Zeitpunkt der Aushärtung des Materials, wobei dabei auch noch die genauen Bereiche, die von dem UV-Licht bestrahlt werden, gezielt angesteuert werden können. Dabei können sowohl das erste und/ oder das zweite Material unter UV-Licht aushärten. Die reliefartige Struktur und das Motiv an sich können in Verfahren gedruckt werden, welche 3D-Druck und Tintenstrahldruck kombinieren. Beide Materialien können dabei unter UV-Licht aushärten. Selbstverständlich ist es auch möglich, zwei verschiedene Druckprozesse durchlaufen zu lassen und nur für eines der beiden ein Material zu verwenden, welches unter UV-Licht aushärtet.

In einem bevorzugten Ausführungsbeispiel wird nach dem Aufbringen des zweiten farbigen Materials noch eine Abschlussschicht auf das Motiv aufgebracht. Diese dient der Versiegelung sowohl der reliefartigen Struktur als auch der Farbmusterschicht und sichert so das gesamte Motiv an sich. Die reliefartige Struktur ist noch spürbar, aber es wird vermieden, dass sich kleine Öffnungen oder feine Strukturen darin befinden, in welchen sich Schmutz oder Mikroorganismen ansiedeln könnten. Dies ist insbesondere bei dem geplanten Einsatz im Sanitärbereich wichtig. Außerdem wird das Motiv durch die Abschlussschicht wasserbeständiger und korrosionsbeständiger und vor Beschädigungen geschützt, bzw. das Abbrechen oder Abfallen des Motives wird verhindert. Der Toilettensitz wird auch biegesteifer. Vorteilhafterweise besteht die Abschlussschicht dabei aus einem unter UV-Licht aushärtenden Lack, der nach dem Aufbringen auf das Motiv bzw. den Toilettensitz zunächst für mehrere Minuten, z.B. acht bis 20 bei einer etwas erhöhten Temperatur wie beispielsweise 20°C bis 30°C ruhen gelassen wird, damit der Lack sich setzen kann und ggf. beim Auftragen aufgetretene Bläschen zusammengefallen sind. Erst danach wird der Lack unter UV-Licht gehärtet, um das Motiv zu versiegeln. Als Lichtquelle für das erforderliche UV-Licht kann auch hier wieder die gleiche UV-Lichtquelle verwendet werden wie für den Auftrag des Materials des Motivs. Der Lack sollte dabei am besten farblos sein, um die Farben des Motivs nicht zu verfälschen. Durch das Aufbringen der Abschlussschicht wird die Oberfläche des Motivs von einem Benutzer als unebenes dreidimensionales Reliefmuster wahrgenommen.

Bevorzugt wird für den Druck des Motivs als erstes Material ein kostengünstigeres schwarzes Material verwendet, welches dann die reliefartige Struktur bildet und als zweites Material ein farbiges Material, welches sich aus vier Farben zusammensetzt, am besten als CMYW-System (cyan, magenta, gelb, weiß). Hierdurch erhält man in Kombination mit dem schwarzen Material der reliefartigen Struktur ein Fünf-Farbsystem (CMYKW - cyan, magenta, gelb, schwarz, weiß) und so können alle gewünschten Farbschattierungen für das Motiv zusammen gemischt werden, um einen optisch ansprechenden Farbverlauf zu bilden. Wenn das Material für den Aufbau der reliefartigen Struktur schwarz ist, werden für den Aufbau der Farbmusterschicht nur noch die anderen vier Farben verwendet. Die Dicke der reliefartigen Struktur kann dabei beispielsweise 0,8 mm bis 2 mm betragen, die Dicke der Farbmusterschicht beispielsweise 0,1 mm bis 0,5 mm. Es sind aber auch andere Verhältnisse denkbar.

Einen weiteren Vorteil beim Drucken erfährt man, wenn man den Rand des Toilettensitzes vor dem Druckvorgang anfast bzw. den Toilettensitz entgratet. Hierdurch kann das Material bis zum Rand des Toilettensitzes gleichmäßig und gut haftend aufgebracht werden und es werden eventuelle bei der Herstellung des Toilettensitzes an sich aufgetretene Grate entfernt, um ein optimales Druckergebnis zu erhalten.

Vorteilhafterweise ist die Druckmaschine so ausgebildet, dass sie nach der Beendigung des Druckprozesses in einen Stand-By-Modus geht oder sich vollständig abschaltet. So wird unnötiger Energieverbrauch vermieden.

Wenn ein im UV-Licht aushärtendes Material für den Druck verwendet wird, kann dieses durch LEDs erzeugt werden. Dies ist eine besonders energiearme Art der Erzeugung von Licht und der Aushärtungsprozess kann gezielt ausgeführt werden, indem das Material dem Licht ausgesetzt wird.

Um ein gewünschtes Motiv auf einen Toilettensitz zu drucken, kann es vorher an einem Computer durch ein passendes Computerprogramm aufbereitet werden, um die richtigen Druckparameter zu generieren und den gewünschten Druck des Motivs mit der vollständigen oder teilweisen reliefartigen Struktur durchführen zu können.

Erfindungsgemäße Toilettensitze weisen zumindest ein bereichsweise reliefartiges Motiv auf und umfassen einen Sitzbereich und einen Deckel, welcher schwenkbar am Sitzbereich angeordnet ist. Das Motiv ist dabei auf der Innenseite und/oder der Außenseite des Sitzbereichs und/oder des Deckels angeordnet. Es können an einem Toilettensitz auch mehrere Motive angeordnet sein, wobei identisch ähnliche oder auch unterschiedliche Motive gewählt werden können.

Das auf den Toilettensitz aufgebrachte Motiv weist wenigstens einen Bereich auf, in dem es eine reliefartige Struktur besitzt, wobei vorteilhafterweise das auf dem Toilettensitz befindliche Motiv von der reliefartigen Struktur aufgegriffen bzw. nachempfunden wird, so dass das aufgedruckte Muster des Motivs sich in der reliefartigen Struktur wiederfindet. Hierdurch entsteht ein Zusammenspiel aus dem aufgedruckten Muster und dem Relief, welches den optischen Gesamteindruck, aber auch die Haptik des Toilettensitzes verbessert und verstärkt.

Der Korpus des Toilettensitzes selbst kann dabei aus einem beliebigen Material bestehen, beispielsweise aus MDF, HDF, Spanholz, Sperrholz, massivem Holz, Bambus, Glas, Harnstoff-Formaldehyd, Gestein, einem Kunststoff, wie z.B. PVC oder Polyacryl, aus einem Metall oder aus einem Verbundwerkstoff. Das Material des Toilettensitzes an sich ist für die Erfindung unerheblich, da die reliefartige Struktur auf nahezu jedes Material aufgebracht werden kann.

Das erfindungsgemäße Herstellungsverfahren hat unter anderem den Vorteil, dass quasi jedes gewünschte Motiv mit einer gewünschten Menge an reliefartiger Struktur in allen möglichen Farben herstellbar ist. Hierdurch können auch Prototypen oder individuell gestaltete Toilettensitze auf einfach Weise hergestellt werden und das Motiv wirkt durch die reliefartige Struktur lebendiger und intensiver sowohl in optischer als auch in haptischer Sicht als herkömmliche Toilettensitze.

Weitere Vorteile und Ausführungsformen ergeben sich aus der nachfolgenden Beschreibung, den Unteransprüchen sowie den Zeichnungen. In den Fig. ist ein erfindungsgemäßer Toilettensitz in einem Ausführungsbeispiel dargestellt. Es zeigen:
- Fig. 1:: einen erfindungsgemäßen Toilettensitz während des Druckprozesses, in Seitenansicht,
- Fig. 2a:: einen Toilettensitz mit fertig gedrucktem Motiv auf dem Deckel perspektivisch von oben,
- Fig. 2b:: eine Vergrößerung eines stilisierten Querschnitts durch den Deckel des Toilettensitzes aus Fig. 2a,
- Fig. 3:: ein Querschnitt durch den Aufbau des auf die Dekorseite aufgebrachten Motivs.

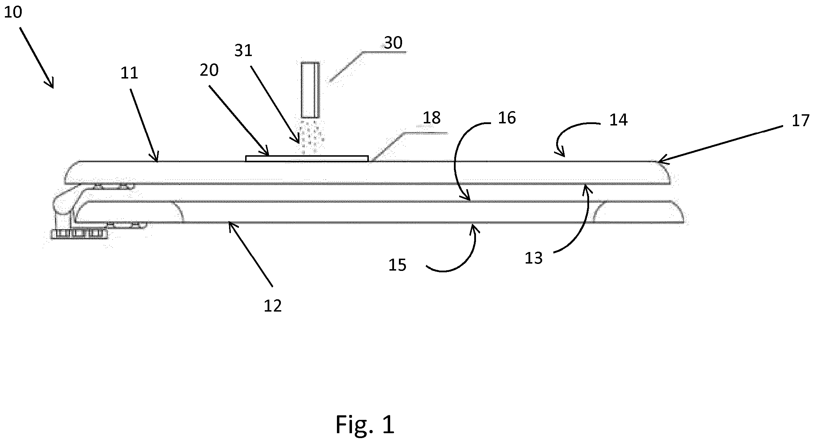

Fig. 1 zeigt einen erfindungsgemäßen Toilettensitz 10 in Seitenansicht. Der Toilettensitz 10 umfasst einen Deckel 11 und einen Sitzbereich 12, die über ein Gelenk miteinander schwenkbar in bekannter Weise verbunden sind. Sowohl der Deckel 11 kann auf seiner Innenseite 13 und/oder Außenseite 14 ein Motiv 20 aufweisen als auch der Sitzbereich 12 an seiner Innenseite 15 und/oder Außenseite 16. Am häufigsten wird ein erfindungsgemäßes Motiv 20 auf der Außenseite 14 des Deckels 11 angeordnet. Weiterhin ist der Rand 17 des Toilettensitzes 10 zu erkennen, der vor dem Druckprozess angefast werden kann.

Man erkennt eine Düse 30, die ein Material 31 auf die zu bedruckende Oberfläche 18 des Toilettensitzes 10 aufbringt. Die Düse 30, das Material 31 und der Abstand zu der zu bedruckenden Oberfläche 18 sind hier nicht maßstabsgetreu sondern nur stilistisch dargestellt.

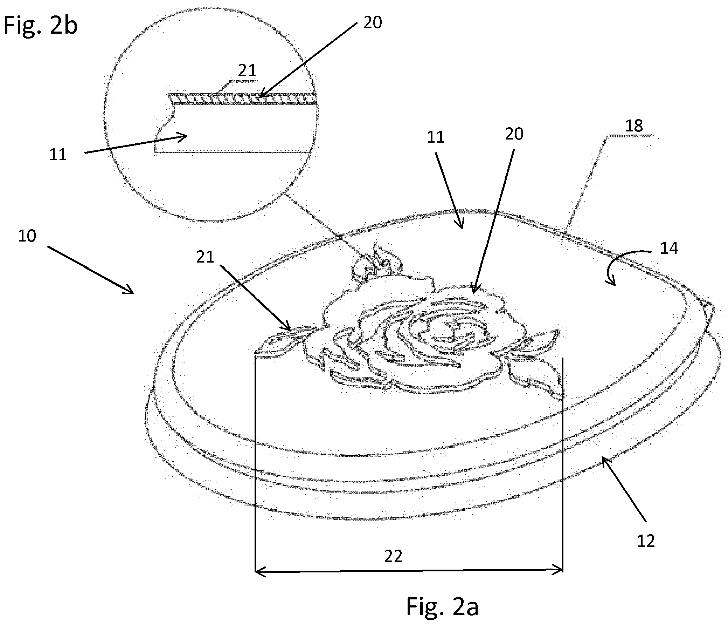

Fig. 2a zeigt nun den fertig hergestellten und bedruckten Toilettensitz 10. Als Motiv 20 ist hier eine Rose erkennbar. Dies ist ausdrücklich nur ein Ausführungsbeispiel zur Veranschaulichung. Man erkennt, dass das Motiv 20 eine reliefartige Struktur 21 über den ganzen Bereich 22 aufweist, der die Rose darstellt. Der restliche Bereich der Dekorseite 18 ist ebenfalls wie die reliefartige Struktur 21 von dem zweiten Material bedruckt und bildet dabei eine Farbmusterschicht 23. In diesem Ausführungsbeispiel ist die Oberseite des Motivs 20 auf einer Höhe und hebt sich von der Außenseite 14 des Deckels 11 und dem Rest der Dekorseite 18 ab. Es ist selbstverständlich auch möglich, die Oberseite des Motivs 20 noch weiter auszuarbeiten und auch hier noch weitere reliefartige Strukturen 21 vorzusehen.

Die Vergrößerung aus Fig. 2b zeigt einen stilisierten Teilquerschnitt durch den Deckel 11 des Toilettensitzes 10 in Fig. 2a. Man erkennt, dass das Motiv 20 als reliefartige Schicht auf die zu bedruckende Oberfläche 18 des Deckels 11 aufgebracht wurde. Die reliefartige Struktur 21 und der Rest der Dekorseite 18 sind mit dem zweiten Material bedruckt und welches hier eine Farbmusterschicht 23 bildet. So ergibt sich ein besonders ansprechendes optisches und haptisches Gesamtbild des Toilettensitzes 10.

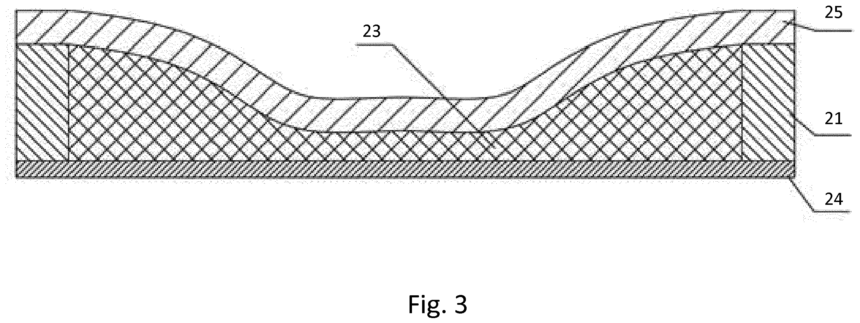

In Fig. 3 erkennt man schließlich den Aufbau des auf die Dekorseite 18 aufgebrachten Motivs 20. Der Toilettensitz 10 selbst bzw. die Dekorseite 18 sind hier nicht dargestellt. Die Dekorseite 18 ist in Fig. 3 jedoch unterhalb des dargestellten Aufbaus des Motivs 20 angeordnet. Als unterste Schicht dient hier ein Haftvermittler 24, der für eine gute Haftung des Materials des Motivs 20 an der Dekorseite 18 sorgt. Dieser ist insbesondere bei der Verwendung von Materialien mit sehr glatter Oberseite für den Toilettensitz 10 notwendig, um den Halt der Materials 31 an der Dekorseite 18 zu optimieren.

Auf den Haftvermittler 24 wird die reliefartige Struktur 21 zumindest bereichsweise aufgebracht. Die reliefartige Struktur 21 bedeckt hier nicht die gesamte Oberfläche der Dekorseite 18, aber dies kann von Motiv 20 zu Motiv 20 variieren. Die dann angebrachte Farbmusterschicht 23 bedeckt in diesem Ausführungsbeispiel die beiden in Fig. 3 gezeigten Bereiche der reliefartigen Struktur 21 nicht, was bedeutet, dass diese hier schwarz bleiben, wenn schwarzes Material für den Aufbau der reliefartigen Struktur 21 verwendet wird. Je nach Motiv 20 werden jedoch auch alle Bereiche der reliefartigen Struktur 21 von der Farbmusterschicht 23 bedeckt.

Schließlich ist noch eine Abschlussschicht 25 vorgesehen, die das Motiv 20 vollständig bedeckt und schützt. Das Motiv 20 wird so wasserbeständig und korrosionsbeständig und vor Verunreinigungen und Beschädigungen geschützt. Durch den Verlauf der Abschlussschicht 25 bleibt die reliefartige dreidimensionale Struktur des Motivs 20 erhalten.

Abschließend sei noch darauf hingewiesen, dass die hier beschriebene Ausführungsform lediglich eine beispielhafte Verwirklichung der Erfindung darstellt. Diese ist nicht darauf beschränkt. Es sind vielmehr noch Abänderungen und Abwandlungen möglich. So kann sich die reliefartige Struktur auch über die gesamte Oberfläche des Deckels oder des Sitzbereiches erstrecken. Die Kombination aus zweidimensionalen Bereichen und reliefartigen Strukturen kann dabei beliebig - je nach Wunsch und Motiv - kombiniert werden.

### Bezugszeichenliste:

- 10: Toilettensitz
- 11: Deckel
- 12: Sitzbereich
- 13: Innenseite von 11
- 14: Außenseite von 11
- 15: Innenseite von 12
- 16: Außenseite von 12
- 17: Rand von 10
- 18: Dekorseite
- 20: Motiv
- 21: reliefartige Struktur
- 22: Bereich
- 23: Farbmusterschicht
- 24: Haftvermittler
- 25: Abschlussschicht
- 30: Düse
- 31: Material

## Patentansprüche

1. Verfahren zur Herstellung eines mit einem zumindest bereichsweise reliefartigen Motiv (20) versehenen Toilettensitzes (10),
wobei auf dem Toilettensitz (10) auf wenigstens einer Seite das Motiv (20) aufgebracht wird, im Weiteren Dekorseite (18) genannt,
wobei zunächst die Dekorseite (18) gereinigt und ggf. noch geglättet und/oder geschliffen und/oder poliert wird,
danach der geplante Verlauf des Motivs (20) auf der Dekorseite (18) vorskizziert wird,
dann ein erstes einfarbiges Material (31) durch 3D-Druck in Form der gewünschten reliefartigen Struktur (21) des Motivs (20) aufgebracht wird, um einen Reliefrohling zu bilden
und schließlich ein zweites, farbiges Material durch 3D-Druck auf die Dekorseite (18) und den Reliefrohling aufgebracht wird, wobei eine Farbmusterschicht (23) gebildet wird, um das gewünschte farbige reliefartige Motiv (20) zu erzielen.

2. Verfahren nach Anspruch 1, **dadurch gekennzeichnet, dass** auf der Dekorseite (18) zunächst ein Haftvermittler (24) und/oder ein Stabilisierungsmittel aufgebracht werden, bevor die Dekorseite (18) einem Reinigungs- und/oder Glättungsschritt und/oder dem Druckprozess unterzogen wird.

3. Verfahren nach einem der Ansprüche 1 oder 2, **dadurch gekennzeichnet, dass** wenigstens eine Düse (30) das erste Material (31) auf die Dekorseite (18) des Toilettensitzes (10) aufbringt bzw. aufsprüht.

4. Verfahren nach einem der Ansprüche 1 bis 3, **dadurch gekennzeichnet, dass** das erste Material (31) und/oder das zweite Material, welches für das Aufbringen des Motivs (20) und/oder für das Aufbringen der reliefartigen Struktur (21) verwendet wird, ein unter UV-Licht aushärtendes Material (31) ist.

5. Verfahren nach einem oder mehreren der vorherigen Ansprüche, **dadurch gekennzeichnet, dass** nach dem Aufbringen des zweiten farbigen Materials noch eine Abschlussschicht (25) aufgebracht wird, um das reliefartige Motiv (20) zu schützen und/oder zu versiegeln.

6. Verfahren nach Anspruch 5, **dadurch gekennzeichnet, dass** die Abschlussschicht (25) aus einem unter UV-Licht aushärtenden Lack besteht und nach dem Aufbringen zunächst für mehrere Minuten, insbesondere 8 bis 20 Minuten, ruhen gelassen wird, bevor der Lack durch Bestrahlung mit UV-Licht ausgehärtet wird.

7. Verfahren nach einem oder mehreren der vorherigen Ansprüche, **dadurch gekennzeichnet, dass** für das Druckverfahren als erstes Material (31) schwarzes Material und als zweites Material farbiges Material, insbesondere in vier verschiedenen Farben, verwendet wird.

8. Verfahren nach einem oder mehreren der vorherigen Ansprüche, **dadurch gekennzeichnet, dass** der Rand (17) des Toilettensitzes (10) vor der Durchführung des Druckvorgangs angefast und/oder der Toilettensitz (10) entgratet wird.

9. Verfahren nach einem oder mehreren der vorherigen Ansprüche, **dadurch gekennzeichnet, dass** nach Beendigung des Druckvorgangs sich die Maschine, die den Druckprozess durchführt, automatisch abschaltet oder in einen Stand-By-Modus geht.

10. Verfahren nach einem oder mehreren der vorherigen Ansprüche, **dadurch gekennzeichnet, dass** das Aushärten des verwendeten Materials (31) und/oder der Abschlussschicht (25) durch Bestrahlung mit von einer oder mehreren LEDs erzeugtem Licht erfolgt.

11. Verfahren nach einem oder mehreren der vorherigen Ansprüche, **dadurch gekennzeichnet, dass** das zu druckende Motiv (20) von einem Computer derartig verarbeitet wird, dass die Parameter sowohl für den Druck der reliefartigen Struktur als auch für den Druck des Motivs (20) an sich generiert werden.

12. Toilettensitz (10) mit wenigstens einem zumindest bereichsweise reliefartigen Motiv (20),
mit einem Sitzbereich (12) und einem Deckel (11), der schwenkbar am Sitzbereich (12) angeordnet ist,
wobei das Motiv (20) auf der Innenseite (13) und/oder der Außenseite (14) des Deckels (11) und/oder auf der Innenseite (15) und/oder der Außenseite (16) des Sitzbereichs (12) vorgesehen ist
und wobei das Motiv (20) ein erstes einfarbiges Material (31), welches zur Bildung eines Reliefrohlings durch 3D-Druck in Form der gewünschten reliefartigen Struktur (21) des Motivs (20) aufgebracht ist, umfasst und das Motiv (20) weiterhin eine Farbmusterschicht (23) umfasst, die aus einem zweiten, farbigen Material besteht, welches durch 3D-Druck auf die Dekorseite (18) und den Reliefrohling aufgebracht ist.

13. Toilettensitz (10) nach Anspruch 11, **dadurch gekennzeichnet, dass** die reliefartige Struktur (21) das auf dem Toilettensitz (10) befindliche Motiv (20) nachempfindet.

14. Toilettensitz (10) nach einem der Ansprüche 11 oder 12, **dadurch gekennzeichnet, dass** der Toilettensitz (10) aus MDF, HDF, Spanholz, Sperrholz, massivem Holz, Bambus, Glas, Harnstoff-Formaldehyd, Gestein, einem Kunststoff, wie z.B. PVC oder Polyacryl, aus einem Metall oder aus einem Verbundwerkstoff besteht.

## Claims

1. Method for manufacturing a toilet seat (10) equipped with an at least regionally relief-like motif (20),
the motif (20) being applied to at least one side of the toilet seat (10), hereinafter referred to as the decorative side (18),
whereby first the decorative side (18) is cleaned and possibly also smoothed and / or ground and / or polished,
then the planned design of the motif (20) is sketched out on the decorative side (18), then an initially monochrome material (31) is applied by 3D printing in the form of the desired relief-like structure (21) of the motif (20) in order to form a relief blank,
and finally a second, coloured material is applied to the decorative side (18) and the relief blank by 3D printing, a colour pattern layer (23) being formed in order to achieve the desired coloured relief-like motif (20).

2. Method according to Claim 1, **characterised in that** a bonding agent (24) and / or a stabilising agent are applied to the decorative side (18) before the decorative side (18) is subjected to a cleaning and / or smoothing step and / or the printing process.

3. Method according to one of Claims 1 or 2, **characterised in that** at least one nozzle (30) applies or sprays the first material (31) onto the decorative side (18) of the toilet seat (10).

4. Method according to one of Claims 1 to 3, **characterised in that** the first material (31) and / or the second material used for applying the motif (20) and / or for applying the relief-like structure (21) is a material (31) that cures under UV light.

5. Method according to one or more of the preceding claims, **characterised in that**, after the application of the second coloured material, a final layer (25) is applied in order to protect and / or seal the relief-like motif (20).

6. Method according to Claim 5, **characterised in that** the final layer (25) consists of a varnish that cures under UV light and, after application, is initially left to rest for several minutes, in particular 8 to 20 minutes, before the varnish is cured by irradiating with UV light.

7. Method according to one or more of the preceding claims, **characterised in that** a black material is used as the first material (31) and a coloured material, in particular in four different colours, is used as the second material.

8. Method according to one or more of the preceding claims, **characterised in that** the edge (17) of the toilet seat (10) is chamfered and / or the toilet seat (10) is deburred before the printing process is carried out.

9. Method according to one or more of the preceding claims, **characterised in that** after the end of the printing process, the machine that carries out the printing process switches off automatically or goes into stand-by mode.

10. Method according to one or more of the preceding claims, **characterised in that** the material (31) and / or the final layer (25) used is cured by irradiation with light generated by one or more LEDs.

11. Method according to one or more of the preceding claims, **characterised in that** the motif (20) to be printed is processed by a computer in such a way that the parameters are generated both for printing the relief-like structure and for printing the motif (20) itself.

12. Toilet seat (10) with at least one at least partially relief-like motif (20),
with a seat area (12) and a lid (11) pivotably arranged on the seat area (12), wherein the motif (20) is provided on the inside (13) and / or the outside (14) of the lid (11) and / or on the inside (15) and / or the outside (16) of the seat area (12), and wherein the motif (20) comprises a first monochrome material (31) which is applied to form a relief blank by 3D printing in the form of the desired relief-like structure (21) of the motif (20),
and the motif (20) further comprises a colour pattern layer (23) consisting of a second, coloured material applied to the decorative side (18) and the relief blank by 3D printing.

13. Toilet seat (10) according to Claim 11, **characterised in that** the relief-like structure (21) emulates the motif (20) located on the toilet seat (10).

14. Toilet seat (10) according to one of Claims 11 or 12, **characterised in that** the toilet seat (10) is made of MDF, HDF, chipboard, plywood, solid wood, bamboo, glass, urea-formaldehyde, rock, a plastic such as PVC or polyacrylic or a metal or a composite material.

## Revendications

1. Procédé de fabrication d'un siège (10) de toilettes doté d'un motif (20) au moins localement en relief,
sachant que le motif (20) est appliqué sur le siège (10) de toilettes sur au moins un côté ci-après dénommé « côté du décor » (18),
sachant que dans un premier temps le côté du décor (18) est nettoyé et, le cas échéant, ensuite lissé et/ou poncé et/ou poli,
qu'ensuite le tracé planifié du motif (20) est esquissé sur le côté du décor (18), qu'ensuite un premier matériau (31) monochrome est appliqué par impression 3D, sous la forme de la structure (21) en relief souhaitée du motif (20) pour former un relief brut
et qu'enfin un second matériau de couleur est appliqué par impression 3D sur le côté du décor (18) et le relief brut, sachant qu'une couche (23) de motif coloré est formée pour obtenir le motif (20) de couleur en relief souhaité.

2. Procédé selon la revendication 1, **caractérisé en ce que** sur le côté du décor (18) est/sont appliqué(s) dans un premier temps un agent d'adhérence (24) et/ou un agent stabilisant avant que le côté du décor (18) passe par une étape de nettoyage et/ou de lissage et/ou subisse le processus d'impression.

3. Procédé selon l'une des revendications 1 ou 2, **caractérisé en ce qu'**au moins une buse (30) applique ou pulvérise le premier matériau (31) sur le côté du décor (18) du siège (10) de toilettes.

4. Procédé selon l'une des revendications 1 à 3, **caractérisé en ce que** le premier matériau (31) et/ou le deuxième matériau utilisé pour appliquer le motif (20) et/ou pour appliquer la structure en relief (21) est un matériau (31) durcissant sous lumière ultraviolette.

5. Procédé selon une ou plusieurs revendications précédentes, **caractérisé en ce qu'**après l'application du second matériau de couleur est appliquée ensuite une couche de finition (25) servant à protéger et/ou sceller le motif (20) en relief.

6. Procédé selon la revendication 5, **caractérisé en ce que** la couche de finition (25) se compose d'une laque durcissant sous lumière ultraviolette et qu'après l'application la couche est laissée à reposer pendant plusieurs minutes, notamment pendant 8 à 20 minutes, avant le durcissement complet de la laque par exposition à la lumière ultraviolette.

7. Procédé selon une ou plusieurs revendications précédentes, **caractérisé en ce que** pour le procédé d'impression le premier matériau utilisé (31) est un matériau noir et comme second matériau un matériau de couleur, notamment de quatre couleurs différentes.

8. Procédé selon une ou plusieurs revendications précédentes, **caractérisé en ce que** le bord (17) du siège (10) de toilettes est chanfreiné avant de réaliser l'opération d'impression et/ou que le siège (10) de toilettes est ébavuré.

9. Procédé selon une ou plusieurs revendications précédentes, **caractérisé en ce qu'**après avoir achevé l'opération d'impression, la machine qui exécute le processus d'impression s'éteint automatiquement ou entre en mode veille.

10. Procédé selon une ou plusieurs revendications précédentes, **caractérisé en ce que** le durcissement complet du matériau (31) utilisé et/ou de la couche de finition (25) a lieu par exposition à de la lumière générée par une ou plusieurs LED.

11. Procédé selon une ou plusieurs revendications précédentes, **caractérisé en ce que** le motif (20) à imprimer est traité par un ordinateur de sorte que sont générés les paramètres aussi bien pour l'impression de la structure en relief que pour l'impression du motif (20) proprement dit.

12. Siège (10) de toilettes doté d'au moins un motif (20) au moins localement en relief, doté d'une zone d'assise (12) et d'un couvercle (11) disposé pivotant sur la zone d'assise (12),
sachant que le motif (20) est prévu sur le côté intérieur (13) et/ou le côté extérieur (14) du couvercle (11) et/ou sur le côté intérieur (15) et/ou le côté extérieur (16) de la zone d'assise (12)
et sachant que le motif (20) comprend un premier matériau (31) monochrome qui est appliqué pour former un relief brut par impression 3D ayant la forme de la structure (21) en relief souhaitée du motif (20)
et que le motif (20) comprend par ailleurs une couche (23) de motif coloré composée d'un second matériau de couleur appliqué par impression 3D sur le côté du décor (18) et sur le relief brut.

13. Siège (10) de toilettes selon la revendication 11, **caractérisé en ce que** la structure en relief (21) s'inspire du motif (20) situé sur le siège (10) de toilettes.

14. Siège (10) de toilettes selon l'une des revendications 11 ou 12, **caractérisé en ce que** le siège (10) de toilettes est en MDF, HDF, agglomérés, contreplaqué, bois massif, bambou, verre, urée-formaldéhyde, pierre, en matière plastique dont par ex. le PVC ou le polyacryle, en métal ou en matériau composite.
